# EUROPÄISCHE PATENTSCHRIFT

(11) **EP 1 648 067 B1**
(45) Veröffentlichungstag und Bekanntmachung des Hinweises auf die Patenterteilung: **27.02.2013**
(21) Anmeldenummer: 05022265.2
(22) Anmeldetag: 12.10.2005
(51) Int. Cl.: H02G 3/22

(54) **Kühl- und/oder Gefriergerät mit Dichtelement**
Refrigerator and/or freezer with sealing element
Appareil de refroidissement et/ou de congélation avec élément d'étancheité

(30) Priorität: 13.10.2004 DE 202004015861 U
(43) Veröffentlichungstag der Anmeldung: 19.04.2006
(73) Patentinhaber: Liebherr-Hausgeräte Ochsenhausen GmbH, 88416 Ochsenhausen (DE)
(72) Erfinder: Dorner, Georg, 88416 Steinhausen/Rot (DE); Friedmann, Volker, 88400 Biberach (DE); Schubert, Ralf, 88484 Gutenzell (DE)
(74) Vertreter: Herrmann, Uwe

(56) Entgegenhaltungen:
- EP-A1- 1 236 943
- EP-A2- 1 403 991
- WO-A-99/52743
- FR-A1- 2 809 877
- US-A- 2 897 533
- US-A- 5 238 299
- US-A- 6 051 795

## Beschreibung

Die vorliegende Erfindung betrifft ein Kühl- und/oder Gefriergerät gemäß dem Oberbegriff des Anspruchs 1.

Es besteht häufig das Problem, dass Kabel oder Leerrohre durch Durchbrüche in Wandungen beispielsweise eines Kühl- oder Gefriergerätes gezogen werden müssen. Die eingezogenen Kabel dienen beispielsweise zur Stromversorgung oder allgemein zur elektrischen Versorgung beispielsweise von Bedienelementen eines Kühl- oder Gefriergerätes. Bei vorbekannten Lösungen werden die Kabel mit geschlitzten Tüllen eingesetzt. Hierbei müssen die Kabellängen zunächst richtig bemessen werden. Anschließend erfolgt die Abdichtung mit Kitt, wodurch die Anordnung fest in der Wandung des Gerätes aufgenommen ist. Für den Servicefall muß dabei genügend Überlänge des Kabels vorgesehen werden, da sonst beispielsweise die Demontage der Bedienteilblende nicht möglich oder sehr schwierig ist bzw. die Rückseite der Blende nicht zugänglich ist. Reicht die Überlänge der Kabel nicht aus, muß die Anordnung aus dem Durchbruch entfernt werden und später erneut mit Kitt abgedichtet werden. Die vorbekannte Lösung ist somit verhältnismäßig unflexibel bzw. in ihrer Handhabung aufwendig. Die Druckschrift EP 1 403 991 A2 offenbart ein Dichtungselement, das ein Kabelbündel umgibt und zur Abdichtung einer in einer Wandung vorliegenden Bohrung dient. Das Dichtelement weist einen Aufnahmebereich für das Kabelbündel sowie eine Dichtlippe auf, die sich im montierten Zustand mit ihren Randbereichen auf eine Seite der Wandung auflegt. Als Anwendungsbereich ist in der EP 1 403 991 A2 der Flugzeugbau beschrieben.

Die EP 1 236 943 A1 offenbart ein Dichtelement, das einen Kanal zur Aufnahme eines Kabels aufweist. Dieser Kanal ist mit einem plastischen Material ausgespritzt, so dass sich insgesamt ein mehrteiliges Dichtelement ergibt. Das Dichtelement weist eine Manschette auf, deren Innenraum mit einem plastisch verformbaren Material ausgefüllt ist, das das Kabel umschließt.

Die FR 2 809 877 A1 offenbart ein Dichtelement, das für den Fahrzeugbau bestimmt ist und dort zur Kabelführung zwischen dem Motorrahmen und der Fahrerkabine angeordnet ist. Es nimmt die Funktion einer Schallisolierung ein und erstreckt sich in einem Hohlraum zwischen Motorrahmen und Fahrerkabine und umschließt das Kabel.

Aus der US 5,238,299 ist ein Kühlgerät bekannt, das in einer seiner Wandungen einen Durchbruch aufweist, durch den ein in einem Dichtelement aufgenommenes Kabel geführt wird. Das Dichtelement weist eine Dichtlippe, die an einer Seite der Wandung anliegt, auf sowie einen stollenartigen Befestigungsbereich. Zwischen der Dichtlippe und diesem Befestigungsbereich erstreckt sich ein zylinderförmiger mittlerer Bereich, der im Durchbruch der Wandung aufgenommen ist.

Die Aufgabe der vorliegenden Erfindung besteht darin, ein Kühl- und/oder Gefriergerät der eingangsgenannten Art dahingehend weiterzubilden, dass das Dichtelement das dieses einfach montierbar und demontierbar ist und somit eine höhere Flexibilität ermöglicht.

Diese Aufgabe wird durch ein Kühl- und/oder Gefriergerät mit den Merkmalen des Anspruchs 1 gelöst. Erfindungsgemäß ist ein Dichtelement für Kabel oder Leerrohrdurchführungen vorgesehen, mit einem Aufnahmebereich für ein oder mehrere Kabel oder Leerrohre, mit einem ersten Befestigungsbereich und einem von diesem beabstandeten zweiten Befestigungsbereich, wobei der erste Befestigungsbereich in seinem Durchmesser die diesem benachbarten Bereiche des Dichtelementes überragt und wobei der zweite Befestigungsbereich eine elastische umlaufende Dichtlippe aufweist. Ein derartiges Dichtelement nimmt das oder die Kabel bzw. Leerrohre in einem Aufnahmebereich auf und ist in einen Durchbruch einsetzbar und aus diesem auch wieder entnehmbar. Es ist nicht erforderlich, die Kabel mit Überlangen vorzusehen, vielmehr können diese in der richtigen Länge und Position fixiert werden. Im Bedarfsfall kann das Dichtelement entnommen werden und es steht genügend Spiel bei der Demontage beispielsweise einer Bedienteilblende zur Verfügung. Die Dichtlippe des erfindungsgemäßen Dichtelementes dient vorzugsweise nicht nur der Abdichtung von Druckdifferenzen vom Innenraum zur Umgebung sondern in vorteilhafter Ausgestaltung der Erfindung auch zur Abdichtung gegen Feuchtigkeit. Die Erfindung weist den Vorteil auf, dass eine Ablängung der einzelnen Kabel nicht erforderlich ist, da nach der beispielsweise vorgesehenen Umspritzung der Kabel bereits eine Positionierung bzw. Fixierung in der Länge erfolgt ist. Auf diese Weise lassen sich gegenüber vorbekannten Lösungen Arbeitsschritte einsparen.

Unter dem Begriff "Durchmesser" ist allgemein der Außenabstand zweier gegenüberliegender Bereiche der Befestigungsbereiche oder sonstige Abschnitte des Dichtelementes zu verstehen. Der Begriff ist somit nicht auf im Querschnitt kreisrunde Ausführungen beschränkt.

Besonders vorteilhaft ist es, wenn das Dichtelement zwei in axialer Richtung der Aufnahmebereiche für die Kabel oder die Leerohre beabstandete Endbereiche aufweist und die Dichtlippe in einem Endbereich und der erste Befestigungsbereich in dem anderen Endbereich des Dichtelementes angeordnet ist.

Weiterhin kann vorgesehen sein, dass die Dichtlippe in unterschiedliche Positionen bewegbar ist und in einer ersten Position mit den der Dichtlippe benachbarten Bereichen des Dichtelementes einen spitzen Winkel einschließt oder an diesen anliegt und in einer zweiten, dichtenden Position mit den der Dichtlippe benachbarten Bereichen des Dichtelementes einen gegenüber größeren Winkel, vorzugsweise einen rechten Winkel oder einem im wesentlichen rechten Winkel einschließt. Dabei kann vorgesehen sein, dass die Dichtlippe beim Einführen des Dichtelementes anliegt bzw. einen spitzen Winkel mit den der Dichtlippe benachbarten Bereichen des Dichtelementes einschließt und beim Heraustreten aus dem Durchbruch in ihre zweite Position schnappt und dabei abdichtet.

In weiterer Ausgestaltung der Erfindung ist vorgesehen, dass das Dichtelement zwischen dem ersten Befestigungsbereich und der Dichtlippe einen mittleren Abschnitt aufweist, dessen Durchmesser die Durchmesser beider oder eines der dem mittleren Abschnitt benachbarten Bereich des Dichtelementes übersteigt. Dieser mittlere Abschnitt kann beispielsweise zur Lagerung des Dichtelementes in einem Kabeldom dienen. Weiterhin kann vorgesehen sein, dass .der zwischen dem mittleren Abschnitt und der Dichtlippe befindliche Bereich geringeren Durchmessers eine Länge aufweist, die der Länge der Dichtlippe entspricht oder diese übersteigt. Somit ist es möglich, die Dichtlippe in diesem Freiraum vollständig aufzunehmen und das Dichtelement somit durch verhältnismäßig kleine Durchbrüche zu bewegen. Die Dichtlippe kann in ihrer zweiten, dichtenden Position den Durchmesser der weiteren Bereiche des Dichtelementes übersteigen. Auf diese Weise ist eine besonders gute Abdichtung gegenüber der den Durchbruch umgebenden Wandung beispielsweise eines Kühl- oder Gefriergerätes gegeben.

Der mittlere Abschnitt des Dichtelementes kann wenigstens bereichsweise eine zylindrische Oberfläche aufweisen. In einer bevorzugten Ausgestaltung hat dieser den gleichen oder in etwa den gleichen Durchmesser wie die der Dichtlippe benachbarten Bereiche mit an diesen angelegter Dichtlippe. In dieser Position kann vorgesehen sein, dass der erste Befestigungsbereich den Bereich größten Durchmessers darstellt.

Eine besonders einfach aufgebautes Dichtelement ergibt sich dadurch, dass dieses erfindungsgemäß durch Umspritzen des oder der Kabel bzw. Leerrohre hergestellt ist. Das Dichtelement ist einteilig ausgeführt und die Aufnahmebereiche werden durch die Bereiche des Dichtelementes gebildet, in dem die Kabel bzw. Leerrohre bzw. das Kabel oder Leerrohr aufgenommen ist.

Um ein leichtes Durchschieben des Dichtelementes durch einen Kabeldom zu ermöglichen, kann vorgesehen sein, dass das Dichtelement wenigstens abschnittsweise eine Oberfläche mit geringem Reibungswiderstand, insbesondere eine wachsartige Oberfläche aufweist.

Eine besonders einfache Ausführung ergibt sich dadurch, dass das Dichtelement im Querschnitt kreisrund ausgeführt ist.

Bei dem ersten Befestigungsbereich handelt es sich erfindungsgemäß um einen im Durchmesser gegenüber benachbarten Bereich des Dichtelementes vergrößerten Bund.

Das erfindungsgemäße Dichtelement besteht vorzugsweise aus einem beliebigen elastischen Material. In Frage kommen beispielsweise PVC (weich), TPE (thermoplastische Elastomere), Silikon oder auch Naturkautschuk.

Die Erfindung betrifft ein Kühl- oder Gefriergerät mit einem Durchbruch in einer Wandung des Gerätes sowie mit dem Dichtelement, das in dem Durchbruch aufgenommen ist. Weiterhin ist vorgesehen, dass die Wandung eine Innenseite sowie eine Außenseite aufweist, dass auf der Innenseite ein den Durchbruch umgebender Kabeldom vorgesehen ist und dass das Dichtelement derart in dem Durchbruch aufgenommen ist, dass die Dichtlippe des Dichtelementes an der Außenseite der Wandung und der erste Befestigungsbereich des Dichtelementes an dem Kabeldom anliegt. In dieser Position dichtet die Dichtlippe zuverlässig außen ab. Der erste Befestigungsbereich an der gegenüberliegenden Seite dichtet auf der Innenseite am Dom ab.

Erfindungsgemäß ist vorgesehen, dass der Kabeldom einen ersten Abschnitt sowie einen sich an diesen anschließenden sich trichterförmig erweiternden zweiten Abschnitt aufweist und dass der erste Befestigungsbereich des Dichtelementes an dem sich trichterförmig erweiternden zweiten Abschnitt des Kabeldoms anliegt. Der erste Abschnitt ist zylindrisch ausgeführt.

Weitere Einzelheiten und Vorteile der Erfindung werden anhand eines in der Zeichnung dargestellten Ausführungsbeispiels näher erläutert. Es zeigen:
- Figur 1:: eine Seitenansicht des erfindungsgemäßen Dichtelementes im teilweise geschnittenen Zustand,
- Figur 2:: eine Querschnittsansicht des Dichtelementes gemäß Figur 1 und
- Figur 3:: eine Seitenansicht des erfindungsgemäßen Dichtelementes im eingesetzten Zustand.

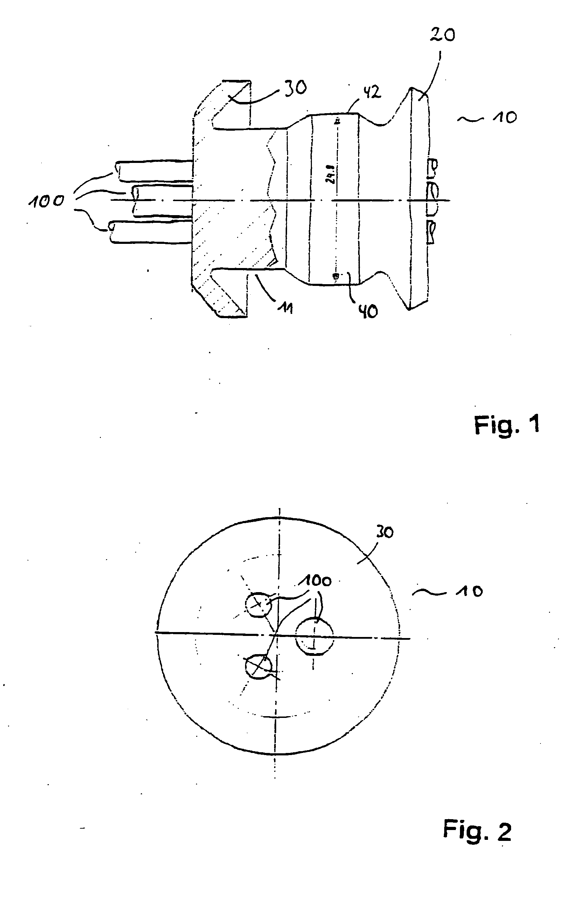

Figur 1 zeigt das erfindungsgemäße Dichtelement 10 in einem teilweise geschnittenen Zustand. In dem links dargestellten Endbereich befindet sich die elastische, umlaufende Dichtlippe 30, in dem rechts dargestellten Endbereich befindet sich der Bund 20. Zwischen diesen beiden Bereichen 20, 30 befindet sich der mittlere Abschnitt 40, der eine zylindrische Oberfläche 42 aufweist. Beidseitig von dem mittleren Bereich 40 erstrecken sich Bereiche geringeren Durchmessers, die einerseits in den Bund 20 und andererseits in die Dichtlippe 30 übergehen. Einer dieser Bereiche ist in Figur 1 mit dem Bezugszeichen 11 gekennzeichnet. Er dient zur Aufnahme der Dichtlippe 30, wenn das Dichtelement 10 durch einen Durchbruch geringen Durchmessers geschoben wird und die Dichtlippe 30 an dem Bereich 11 anliegt.

Das Dichtelement 10 wird durch Umspritzen der in dem Dichtelement 10 aufgenommenen Kabel 100 hergestellt.

In dem vorliegenden Fall ist ein dreipoliges Kabel mit dem Außendurchmesser 5,7 mm und zwei zweipolige Kabel mit dem Außendurchmesser von 4,4 mm umspritzt. Selbstverständlich sind auch andere Abmessungen oder eine andere Anzahl von Kabeln denkbar.

Das Dichtelement 10 ist einstückig ausgeführt. Seine Aufnahmebereiche werden durch die im wesentlichen zylindrischen Ausnehmungen gebildet, in denen die Kabel 100 liegen. Bei dem Werkstoff des Dichtelementes 10 handelt es sich beispielsweise um einen Werkstoff mit 40 bis 45 Shore A, der lebensmittelecht und möglichst geruchsfrei ist und dessen Farbe beliebig ist. Die Oberfläche des Dichtelementes bzw. die mit einem Durchbruch oder einem Kabeldom in Berührung kommenden Bereiche des Dichtelementes 10 weisen eine wachsartige, nicht klebrige Oberfläche auf, da eine Hemmung beim Durchziehen durch einen Durchbruch bzw. einen Kabeldom unerwünscht ist.

Figur 2 zeigt das Dichtelement 10 in einer Querschnittsdarstellung mit Dichtlippe 30 und den drei aufgenommenen Kabeln 100.

Das Dichtelement gemäß Figur 1 und 2 ist um die zentrale Symmetrieachse rotationssymmetrisch ausgeführt.

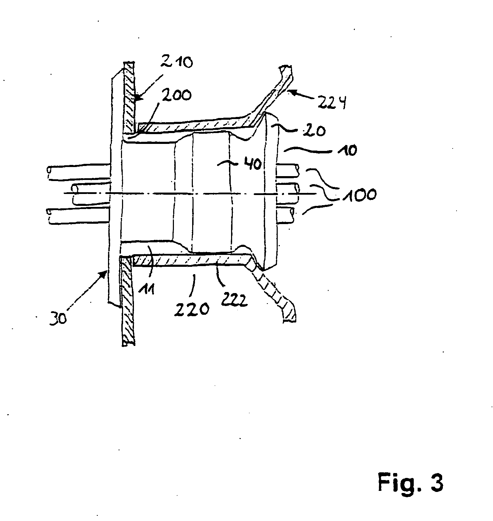

Figur 3 zeigt das Dichtelement 10 in einem in einem Kabeldom 220 aufgenommenen Zustand. Der Kabeldom 220 grenzt an die Rückwand 210 eines Gerätes beispielsweise eines Kühl- oder Gefriergerätes oder einer Einheit eines derartigen Gerätes an. Der Kabeldom 220 umgibt dabei den kreisförmigen Durchbruch 200. Der Kabeldom 220 ist vorzugsweise ebenfalls im Querschnitt kreisförmig ausgeführt. Er weist einen zylindrischen Abschnitt 222 und einen sich an diesen anschließenden trichterförmig erweiternden Abschnitt 224 auf.

Die Montage des Dichtelementes 10 erfolgt gemäß Figur 3 von rechts nach links. Das Dichtelement 10 wird von der rechten Seite, mit der Dichtlippe 30 vorauslaufend in den Kabeldom 220 eingeschoben. Der zylindrische Bereich 222 des Kabeldoms 220 weist einen Durchmesser auf, der in etwa dem Außendurchmesser des zylindrischen Bereichs 40 entspricht oder diesen geringfügig übersteigt. Während des Montagevorgangs ist die Dichtlippe 30 in dem Bereich 11 aufgenommen, der nach einem konisch zulaufenden Übergangsbereich in den mittleren Abschnitt 40 übergeht. Wenn das Ende des Doms 220 bzw. der Durchbruch 200 erreicht ist, schnappt die Dichtlippe 30 über den Domrand und liegt sodann auf der Außenseite der Wandung 210 dichtend an. Der Bund 20 an der gegenüberliegenden Seite des Dichtelementes 10 dichtet in dem trichterförmigen bzw. konischen Bereich 224 des Doms 220 innen ab. Das Dichtelement dient in diesem Zustand beispielsweise zur Abdichtung eines Innenbehälters eines Kühl- bzw. Gefriergerätes gegen Unterdruck und Luftfeuchtigkeit.

Das erfindungsgemäße Dichtelement 10 hat den Vorteil, daß ein oder mehrere Kabel oder Leerrohre durch einen Durchbruch 200 bei gleichzeitiger Abdichtung von Druckdifferenzen vom Innenraum zur Umgebung geführt werden können. Die Kartonschnittkante kann gegen Feuchtigkeit abgedichtet werden.

Aufgrund der vorgespannten Dichtlippen 30 ist ein axialer Toleranzausgleich möglich.

Ein weiterer Vorteil ergibt sich daraus, dass die Kabel 100 in der richtigen Länge und Position fixiert werden können. Das Dichtelement 10 ist aus dem Durchbruch 200 und aus dem Kabeldom 220 entnehmbar, so dass im Bedarfsfall die Kabel 100 mit Dichtelement 10 nachgezogen werden können, wenn eine Bedienteilblende abgenommen werden soll. Somit ergibt sich eine hohe Prozesssicherheit bei der Kabellängenpositionierung und eine Dichtheit die unter anderem wichtig ist im Servicefall bei einem Platinenwechsel. Abgesehen davon ergibt sich durch das erfindungsgemäße Dichtelement 10 gegenüber vorbekannten Lösungen eine ansprechende Optik.

## Patentansprüche

1. Kühl- oder Gefriergerät mit einem Durchbruch (200) in einer Wandung (210) des Gerätes sowie mit einem Dichtelement (10), in dem Kabel oder Leerrohre aufgenommen sind und das in dem Durchbruch (200) aufgenommen ist,
wobei das Dichtelement einen Aufnahmebereich für ein oder mehrere Kabel (100) oder Leerrohre, einen ersten Befestigungsbereich (20) und einen von diesem beabstandeten zweiten Befestigungsbereich (30) aufweist,
wobei der erste Befestigungsbereich (20) einen Durchmesser aufweist, der den Durchmesser der diesem benachbarten Bereiche des Dichtelementes (10) überragt,
wobei der zweite Befestigungsbereich (30) eine elastische umlaufende Dichtlippe (30) aufweist, und
wobei das Dichtelement (10) einteilig ausgeführt ist und durch Umspritzen der oder des Kabels (100) oder Leerrohrs hergestellt ist,
**dadurch gekennzeichnet,**
**dass** es sich bei dem ersten Befestigungsbereich (20) um einen im Durchmesser gegenüber benachbarten Bereichen des Dichtelementes vergrößerten Bund (20) handelt, und
**dass** die Wandung (210) eine Innenseite sowie eine Außenseite aufweist, wobei auf der Innenseite ein den Durchbruch umgebender Kabeldom (220) mit einem zylindrischen ersten Abschnitt (222) sowie einem sich an diesen anschließenden trichterförmig erweiternden zweiten Abschnitt (224) vorgesehen ist, und das Dichtelement (10) derart in dem Durchbruch (200) aufgenommen ist, dass die Dichtlippe (30) an der Außenseite der Wandung (210) und der Bund (20) an dem sich trichterförmig erweiternden zweiten Abschnitt (224) anliegen.

2. Kühl- oder Gefriergerät nach Anspruch 1, **dadurch gekennzeichnet, dass** das Dichtelement (10) zwei in axialer Richtung der Aufnahmebereiche für die Kabel (100) oder die Leerrohre beabstandete Endbereiche aufweist, und dass die Dichtlippe (30) in einem Endbereich und der erste Befestigungsbereich in dem anderen Endbereich des Dichtelementes (10) angeordnet ist.

3. Kühl- oder Gefriergerät nach Anspruch 1 oder 2, **dadurch gekennzeichnet, dass** die Dichtlippe (30) in unterschiedliche Positionen bewegbar ist und in einer ersten Position mit den der Dichtlippe (30) benachbarten Bereichen des Dichtelementes (10) einen spitzen Winkel einschließt oder an diesen anliegt und in einer zweiten, dichtenden Position mit den der Dichtlippe (30) benachbarten Bereichen des Dichtelementes (10) einen demgegenüber vergrößerten Winkel, vorzugsweise einen rechten Winkel oder einen im wesentlichen rechten Winkel einschließt.

4. Kühl- oder Gefriergerät nach einem der vorangehenden Ansprüche, **dadurch gekennzeichnet, dass** das Dichtelement (10) zwischen dem ersten Befestigungsbereich und der Dichtlippe (30) einen mittleren Abschnitt (40) aufweist, dessen Durchmesser die Durchmesser beider oder eines der dem mittleren Abschnitt (40) benachbarten Bereiche des Dichtelementes (10) übersteigt.

5. Kühl- oder Gefriergerät nach Anspruch 4, **dadurch gekennzeichnet, dass** der zwischen dem mittleren Abschnitt (40) und der Dichtlippe (30) befindliche Bereich (11) geringeren Durchmessers eine Länge aufweist, die der Länge der Dichtlippe (30) entspricht oder diese übersteigt.

6. Kühl- oder Gefriergerät nach einem der vorangehenden Ansprüche, **dadurch gekennzeichnet, dass** der Durchmesser der Dichtlippe (30) in ihrer zweiten, dichtenden Position den Durchmesser der weiteren Bereiche des Dichtelementes (10) übersteigt.

7. Kühl- oder Gefriergerät nach einem der vorangehenden Ansprüche, **dadurch gekennzeichnet, dass** der mittlere Abschnitt (40) wenigstens bereichsweise eine zylindrische Oberfläche (42) aufweist.

8. Kühl- oder Gefriergerät nach einem der vorhergehenden Ansprüche, **dadurch gekennzeichnet, dass** das Dichtelement im Querschnitt kreisrund ausgeführt ist.

9. Kühl- oder Gefriergerät nach einem der vorhergehenden Ansprüche, **dadurch gekennzeichnet, dass** das Dichtelement aus einem elastischen Material, vorzugsweise aus PVC (weich), TPE (thermoplastische Elastomere), Silikon oder Naturkautschuk besteht.

## Claims

1. A refrigerator or freezer, having an opening (200) in a wall (210) of the refrigerator or freezer as well as having a sealing element (10) in which cables or empty conduits are received and which is received in the opening (200),
with the sealing element having a reception region for one or more cables (100) or empty conduits, having a first fastening region (20) and a second fastening region (30) spaced apart from the former,
with the first fastening region (20) having a diameter which projects beyond the diameter of the regions of the sealing element (10) adjacent to it,
with the second fastening region (30) having a resilient peripheral sealing lip (30) and
with the sealing element (10) being made as one piece and being manufactured by insert molding of the cables or cable (100) or of the empty conduit,
**characterized in that**
the first fastening region (20) is a flange (20) enlarged in diameter over adjacent regions of the sealing element and
the wall (210) has an inner side and an outer side, with a cable dome (220) surrounding the opening being provided on the inner side and having a first cylindrical section (222) and a second section (224) adjoining it and diverging in funnel shape, and the sealing element (10) is received in the opening (200) such that the sealing lip (30) contacts the outer side of the wall (210) and the flange (20) contacts the second section (224) diverging in funnel shape.

2. A refrigerator or freezer in accordance with claim 1, wherein the sealing element (10) has two end regions spaced apart in the axial direction of the reception regions for the cables (100) or the empty conduits and wherein the sealing lip (30) is arranged in an end region and the first fastening region is arranged in the other end region of the sealing element (10).

3. A refrigerator or freezer in accordance with either of claims 1 or 2, wherein the sealing lip (30) is movable into different positions and, in a first position, encloses an acute angle with the regions of the sealing element (10) adjacent to the sealing lip (30) or contacts them and, in a second, sealing position, encloses a larger angle (compared with the former), preferably a right angle or a substantially right angle, with the regions of the sealing element (10) adjacent to the sealing lip (30).

4. A refrigerator or freezer in accordance with any of the preceding claims, wherein the sealing element (10) has a middle section (40) between the first fastening region and the sealing lip (30) whose diameter exceeds the diameters of both or one of the regions of the sealing element (10) adjacent to the middle section (40).

5. A refrigerator or freezer in accordance with claim 4, wherein the region (11) of lower diameter disposed between the middle section (40) and the sealing lip (30) has a length which corresponds to the length of the sealing lip (30) or exceeds it.

6. A refrigerator or freezer in accordance with any of the preceding claims, wherein the diameter of the sealing lip (30) in its second, sealing position exceeds the diameter of the further regions of the sealing element (10).

7. A refrigerator or freezer in accordance with any of the preceding claims, wherein the middle section (40) has a cylindrical surface (42) at least regionally.

8. A refrigerator or freezer in accordance with any of the preceding claims, wherein the sealing element is made circular in cross-section.

9. A refrigerator or freezer in accordance with any of the preceding claims, wherein the sealing element consists of a resilient material, preferably of PVC (soft), TPE (thermoplastic elastomers), silicone or natural rubber.

## Revendications

1. Appareil de réfrigération ou de congélation avec un perçage (200) dans une paroi (210) de l'appareil et avec un élément d'étanchéité (10), dans lequel sont reçus des câbles ou des tuyaux vides et qui est logé dans le perçage (200),
où l'élément d'étanchéité présente une zone de réception pour un ou plusieurs câbles (100) ou tuyaux vides, une première zone de fixation (20) et une deuxième zone de fixation (30) espacée de celle-ci,
où la première zone de fixation (20) présente un diamètre, qui dépasse le diamètre de la zone avoisinant celle-ci de l'élément d'étanchéité (10),
où la deuxième zone de fixation (30) présente une lèvre d'étanchéité (30) s'étendant élastiquement autour, et
où l'élément d'étanchéité (10) est réalisé en une pièce et est fabriqué par projection tout autour des ou du câble (100) ou du tuyau vide,
**caractérisé en ce que** dans le cas de la première zone de fixation (20), il s'agit d'un collet (20) agrandi par rapport à des zones avoisinantes de l'élément d'étanchéité, et
**en ce que** la paroi (210) présente un côté intérieur et un côté extérieur, où est prévu sur le côté intérieur un dôme de câbles (220) entourant le perçage, avec une première section cylindrique (222) et une deuxième section (224) faisant suite à celle-ci, s'élargissant en forme de trémie, et **en ce que** l'élément d'étanchéité (10) est reçu de telle sorte dans le perçage (200) que la lèvre d'étanchéité (30) s'applique au côté extérieur de la paroi (210), et le collet (20) à la deuxième section (224) s'élargissant en forme de trémie.

2. Appareil de réfrigération ou de congélation selon la revendication 1, **caractérisé en ce que** l'élément d'étanchéité (10) présente deux zones d'extrémité espacées dans la direction axiale des zones de réception pour les câbles (100) ou les tuyaux vides, et **en ce que** la lèvre d'étanchéité (30) est disposée dans une zone d'extrémité et la première zone de fixation dans l'autre zone d'extrémité de l'élément d' étanchéité (10).

3. Appareil de réfrigération ou de congélation selon la revendication 1 ou 2, **caractérisé en ce que** la lèvre d'étanchéité (30) est déplaçable dans des positions différentes et, dans une première position, forme avec les zones de l'élément d'étanchéité (10) avoisinant la lèvre d'étanchéité (30) un angle aigu ou s'applique à celles-ci, et dans une deuxième position d'étanchement, forme avec les zones de l'élément d'étanchéité (10) avoisinant la lèvre d'étanchéité (30) un angle agrandi par rapport à celui-ci, de préférence un angle droit ou un angle sensiblement droit.

4. Appareil de réfrigération ou de congélation selon l'une des revendications précédentes, **caractérisé en ce que** l'élément d'étanchéité (10) présente entre la première zone de fixation et la lèvre d'étanchéité (30) une section médiane (40) dont le diamètre dépasse les diamètres des deux zones ou d'une des zones avoisinant la section médiane (40) de l'élément d'étanchéité (10).

5. Appareil de réfrigération ou de congélation selon la revendication 4, **caractérisé en ce que** la zone (11) d'un plus petit diamètre, située entre la section médiane (40) et la lèvre d'étanchéité (30) présente une longueur qui correspond à la longueur de la lèvre d'étanchéité (30) ou dépasse celle-ci.

6. Appareil de réfrigération ou de congélation selon l'une des revendications précédentes, **caractérisé en ce que** le diamètre de la lèvre d'étanchéité (30), dans sa deuxième position d'étanchement, dépasse le diamètre des autres zones de l'élément d'étanchéité (10).

7. Appareil de réfrigération ou de congélation selon l'une des revendications précédentes, **caractérisé en ce que** la section médiane (40) présente au moins par zones une surface cylindrique (42).

8. Appareil de réfrigération ou de congélation selon l'une des revendications précédentes, **caractérisé en ce que** l'élément d'étanchéité, en section transversale, est réalisé en rond de cercle.

9. Appareil de réfrigération ou de congélation selon l'une des revendications précédentes, **caractérisé en ce que** l'élément d'étanchéité est réalisé en un matériau élastique, de préférence en PVC (mou), TPE (élastomères thermoplastiques), silicone ou caoutchouc naturel.
